# EUROPÄISCHE PATENTSCHRIFT

(11) **EP 1 281 906 B1**
(45) Veröffentlichungstag und Bekanntmachung des Hinweises auf die Patenterteilung: **28.09.2005**
(21) Anmeldenummer: 02090278.9
(22) Anmeldetag: 24.07.2002
(51) Int. Cl.: F16L 19/08

(54) **Kupplung zum Verbinden zweier Leitungsrohre**
Coupling for connecting two pipes
Raccord de liaison de deux conduites

(30) Priorität: 03.08.2001 DE 10138441; 26.06.2002 DE 10229381; 09.07.2002 DE 10231913
(43) Veröffentlichungstag der Anmeldung: 05.02.2003
(73) Patentinhaber: Geberit Mapress GmbH, 40764 Langenfeld (DE)
(72) Erfinder: Sedlak, Bernd, 45478 Mülheim (DE)
(74) Vertreter: Meissner, Peter E.

(56) Entgegenhaltungen:
- EP-A- 0 718 536
- EP-A- 0 942 216
- WO-A-01/18440
- AT-B- 182 022
- DE-C- 817 544
- US-A- 3 591 208

## Beschreibung

Die Erfindung betrifft eine Kupplung zum lösbaren Verbinden von Rohren gemäß dem Oberbegriff des Patentanspruches 1.

Eine Kupplung der gattungsbildenden Art ist aus der DE 199 02 732 A1 bekannt. Diese bekannte Kupplung besteht aus einem einen Außensechskant und einen Außengewindeabschnitt aufweisenden Verschraubungskörper, der stoffschlüssig mit einer koaxial liegenden Hülse verbunden ist. Die Hülse ist wahlweise als glatter Leitungsrohrabschnitt oder als Pressfittingelement ausgebildet. Auf den Außengewindeabschnitt des Verschraubungskörpers ist eine ein Innengewinde aufweisende Kontermutter aufschraubbar. Zum Klemmen und Abdichten sind im Kontaktbereich zwischen Verschraubungskörper und Kontermutter ein Dichtring, ein Vorlegering und ein Klemmring angeordnet.

Nachteilig bei dieser bekannten Kupplung ist, dass für die wahlweise Anbindung eines Leitungsrohres oder eines Pressfittings zwei verschiedene Verschraubungskörper erforderlich sind.

Aus der EP-A-0 718 536 A1 ist ein Adapter zum lösbaren Verbinden eines Elementes eines Leitungsrohrsystems mit einem Leitungsrohr bekannt, bei dem ein standardisiertes Fittingelement verwendet wird, das einen sich nach außen erstreckenden Steg aufweist, der den Anschlag für eine Überwurfmutter bildet.

Aufgabe der Erfindung ist es, eine Kupplung der gattungsmäßigen Art anzugeben, die in einfacher Weise an verschiedene Anbindungsarten angepasst werden kann.

Diese Aufgabe wird ausgehend vom Oberbegriff in Verbindung mit dem kennzeichnenden Merkmal des Anspruches 1 gelöst. Vorteilhafte Weiterbildungen sind jeweils Gegenstand von Unteransprüchen.

Nach der Lehre der Erfindung ist das Anschlusselement als separates Anschlussstück ausgebildet, das in den Verschraubungskörper einschiebbar und gegen Herausziehen fixierbar ist, wobei das sich in den Verschraubungskörper schiebbare Leitungsrohr sich bis in den Anfangsbereich des Anschlussstückes erstreckt.

Diese Art der Ausbildung der Kupplung hat den Vorteil, dass je nach Art der Anbindung wahlweise ein anderes Anschlussstück eingesetzt wird bei immer gleichem Verschraubungskörper. Die Sicherung gegen Herausziehen des Anschlussstückes aus dem Verschraubungskörper erfolgt über einen in den Verschraubungskörper einlegbaren Sprengring. Die Abdichtung zwischen Anschlussstück und Verschraubungskörper kann wahlweise über einen Runddichtring, eine Flachdichtung oder über eine metallische Dichtung erfolgen. Die Dichtscheibe sowie das Ende des Verschlussstückes werden dementsprechend angepasst. Die Klemmung erfolgt über einen konisch ausgebildeten offenen Klemmring, der mit einer an der Dichtscheibe angebrachten komplementär dazu konisch ausgebildeten Fläche zusammenwirkt.

Im Unterschied zum Stand der Technik ist die Kontermutter als Einschraubteil ausgebildet, die in den als Überwurfmutter ausgebildeten Verschraubungskörper ein- und ausschraubbar ist.

Besonders vorteilhaft ist die vorgeschlagene Kupplung, wenn als Anschlussstück ein standardisiertes Pressfittingelement verwendet wird. Dies kann eine Muffe, eine Schiebemuffe, ein Bogen oder ein Reduzierstück sein. Dies erspart eine Anpassung des dem Verschraubungskörper zugewandten Endbereiches und verringert die Lagerhaltung.

Weitere Merkmale, Vorteile und Einzelheiten der Erfindung ergeben sich aus der nachfolgenden Beschreibung von in einer Zeichnung dargestellten Ausführungsbeispielen. Es zeigen:
- **Figur 1**: in einem halbseitigen Längsschnitt und in einer halbseitigen Ansicht eine erste Ausführungsform der erfindungsgemäß ausgebildeten Kupplung.
- **Figur 2**: wie Figur 1, aber eine zweite Ausführungsform.
- **Figur 3**: eine dritte Ausführungsform des Anschlussstückes.
- **Figur 4**: im halbseitigen Querschnitt eine Dichtscheibe.
- **Figur 5 a, b**: eine Ansicht und einen Schnitt durch einen Klemmring.
- **Figur 6**: eine Ausführungsform mit Flachdichtung.
- **Figur 7**: eine vierte Ausführungsform des Anschlussstückes.

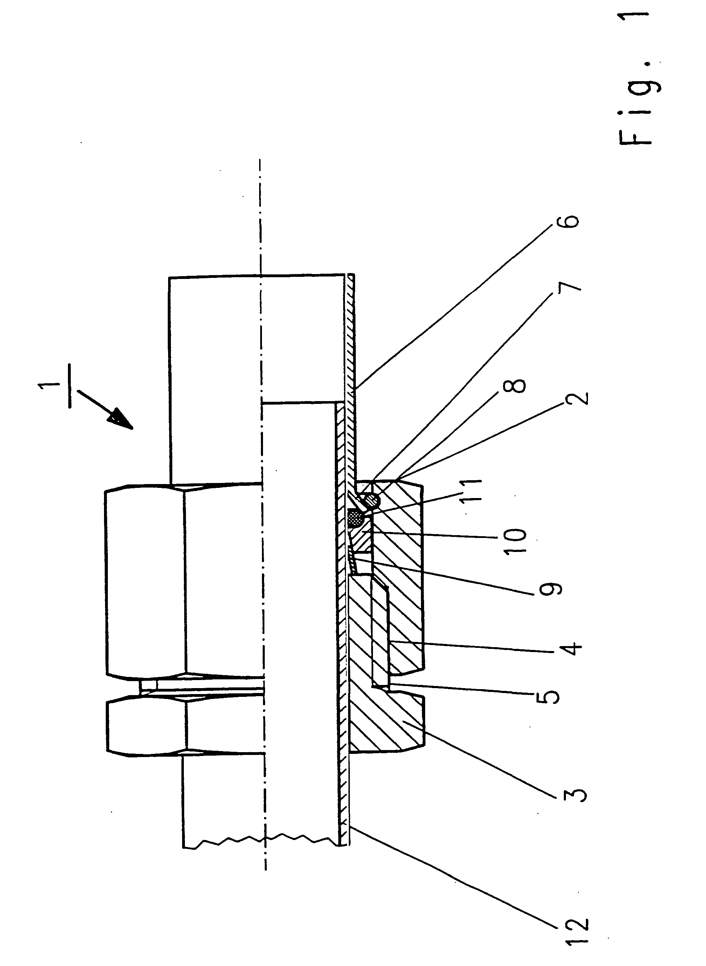

In **Figur 1** ist eine erste Ausführungsform einer erfindungsgemäß ausgebildeten Kupplung 1 dargestellt. Sie besteht aus einem als Überwurfmutter 2 ausgebildeten Verschraubungskörper, die mit einer als Einschraubteil 3 ausgebildeten Kontermutter zusammenwirkt. Dazu weist die Überwurfmutter 2 einen Innengewindeabschnitt 4 und das Einschraubteil einen Außengewindeabschnitt 5 auf. Die aus dem Stand der Technik bekannte koaxial liegende Hülse, die mit dem Verschraubungskörper stoffschlüssig verbunden ist, ist erfindungsgemäß als separates Anschlussstück ausgebildet.

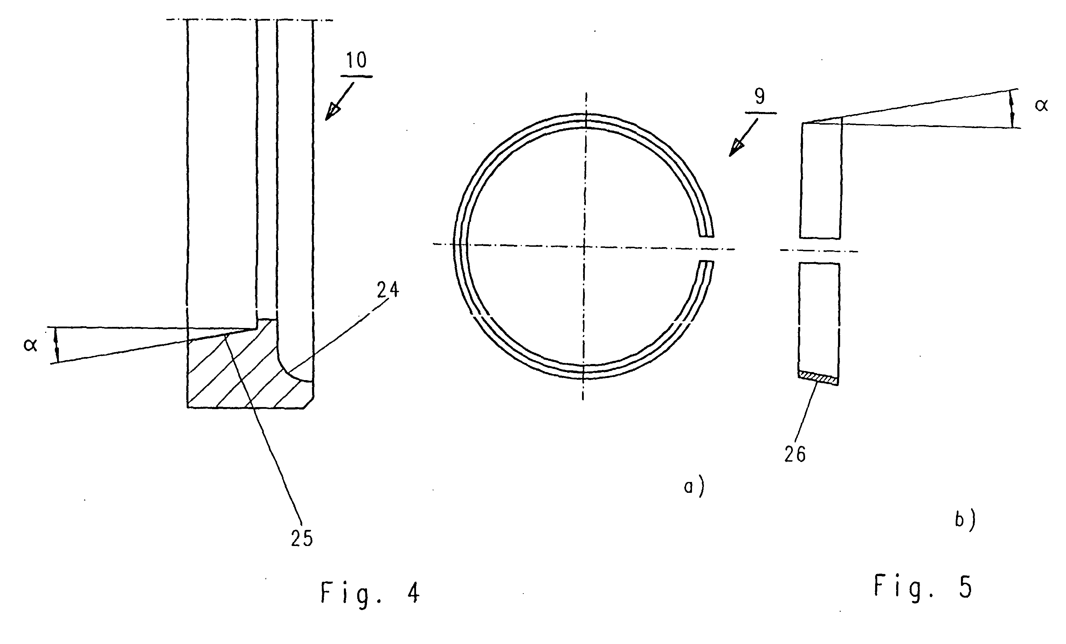

In der in **Figur 1** dargestellten ersten Ausführungsform ist das Anschlussstück als glattendiger Leitungsrohrabschnitt 6 ausgebildet. An dem der Überwurfmutter 2 zugewandten Ende weist der Leitungsrohrabschnitt 6 eine kegelstumpfartige Aufweitung 7 auf. Diese Aufweitung 7 ist so bemessen, dass sie in die Bohrung der Überwurfmutter 2 einschiebbar ist. Damit nach dem Einschieben das Anschlussstück nicht wieder heraus gezogen werden kann, wird in eine in der Bohrung der Überwurfmutter 2 angebrachte ringförmige Nut ein Sprengring 8 eingesetzt. Die Klemmung und Dichtung erfolgt über einen Klemmring 9, der mit einer Dichtscheibe 10 zusammen wirkt, in den ein Dichtring 11 einsetzbar ist. Die Einzelheiten dazu sind in **Figur 4 und 5** erläutert.

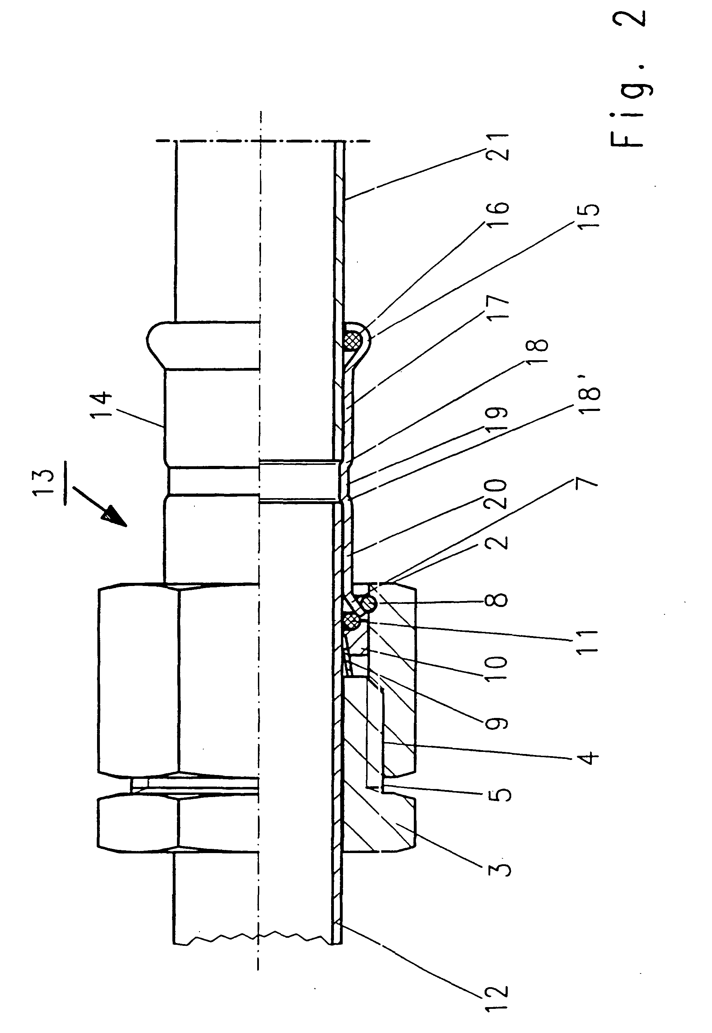

Das eine zu verbindende Leitungsrohr 12 wird durch das Einschraubteil 3 hindurch bis in den Leitungsrohrabschnitt 6 geschoben. Auf den Leitungsrohrabschnitt 6 wird, wie in Figur 2 der DE 199 02 732 A1 dargestellt, ein Pressfittingelement mit einem daran anschließenden Leitungsrohr geschoben und der Leitungsrohrabschnitt 6 mit dem aufgeschobenen Pressfittingelement zusammen unösbar verpresst.

**Figur 2** zeigt im gleichen Längsschnitt und Ansicht eine zweite Ausführungsform einer erfindungsgemäß ausgebildeten Kupplung 13, wobei für gleiche Teile gleiche Bezugszeichen gewählt worden sind. Im Unterschied zur **Figur 1** ist das Anschlussstück als muffenartiges Pressfittingelement 14 ausgebildet. Es weist in bekannter Weise am stimseitigen offenen Ende eine Ringwulst 15 auf, in die ein Dichtring 16 einlegbar ist. An die Ringwulst 15 schließt sich ein erster zylindrisch ausgebildeter Abschnitt 17 an, der mit einem Absatz 18 übergeht in einen zweiten zylindrisch ausgebildeten Abschnitt 19. An diesen schließt sich mit einem Absatz 18' ein dritter zylindrisch ausgebildeter Abschnitt 20 an. Am ersten Absatz 18 kommt das von rechts eingeschobene Leitungsrohr 21 zur Anlage, während das von links eingeschobene Leitungsrohr 12 am zweiten Absatz 18' zur Anlage kommt. Das der Überwurfmutter 2 zugewandte Ende des Pressfittingelementes 14 ist gleich ausgebildet wie in **Figur 1** dargestellt.

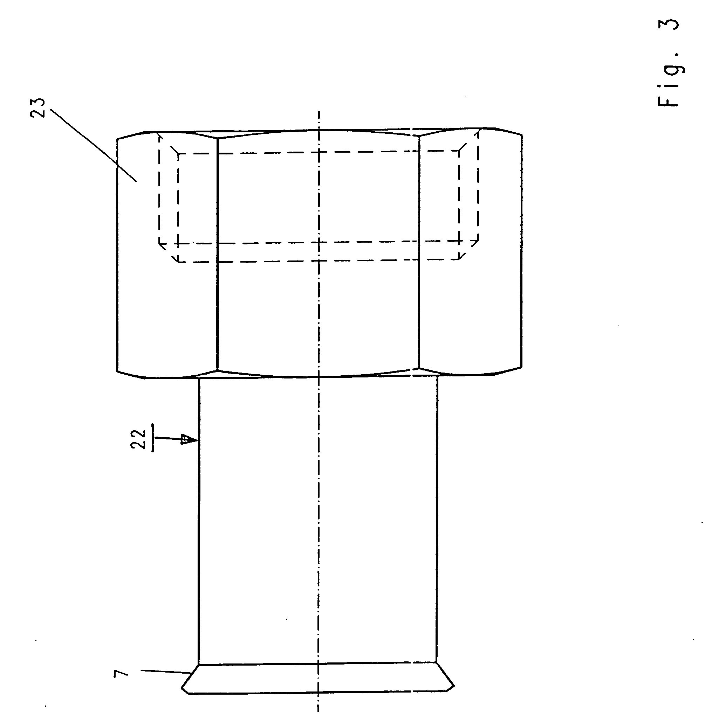

In **Figur 3** ist ein weiteres Anschlussstück dargestellt, hier in Form einer Absatzmuffe 22. Das linke Ende ist vergleichbar ausgebildet wie der in **Figur 1** dargestellte Leitungsrohrabschnitt 6. Das rechte Ende weist ein Mutterteil 23 mit Innengewinde auf. Ebenso könnte es auch ein Mutterteil mit Außengewinde sein. An diese Absatzmuffe könnte problemlos eine Gewinderohrleitung oder dergleichen angeschlossen werden.

**Figur 4** zeigt in einem halbseitigen Querschnitt die Dichtscheibe 10. Auf der dem Anschlussstück zugewandten Seite ist die Dichtscheibe 10 mit einer hohlkehlartigen Ausnehmung 24 versehen, um dort den Dichtring 11 **(Figur 1)** plazieren zu können. Die gegenüber liegende Seite weist eine konisch ausgebildete Bohrung 25 auf, mit einem Konuswinkel α. Diese konische Bohrung 25 wirkt mit dem in **Figur 5 a, b** dargestellten Klemmring 9 zusammen. Der Klemmring 9 ist offen und weist im Querschnitt eine konische Mantelfläche 26 auf. Diese konische Mantelfläche 26 ist mit einem gleichen Konuswinkel α versehen wie die konische Bohrung 25 der Dichtscheibe 10.

Gemäß der Darstellung in **Figur 1 und 2** schiebt sich beim Drehen des Einschraubteiles 3 der offene Klemmring 9 auf die konische Bohrung 25, so dass das eingeschobene Leitungsrohr 12 in der Kupplung fixiert wird.

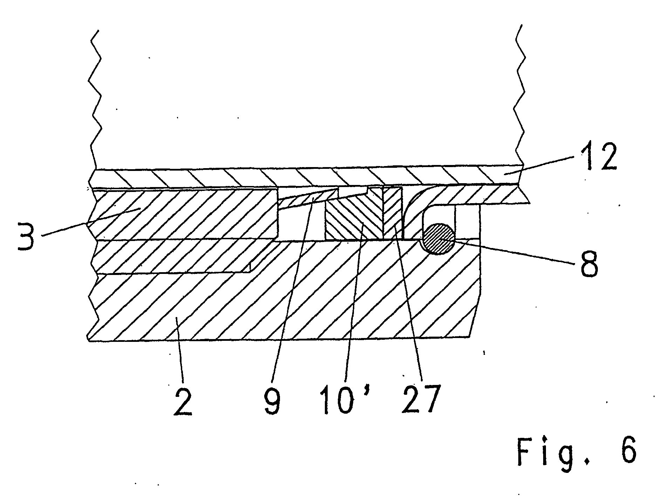

**Figur 6** zeigt in einem Teilausschnitt die Anordnung einer Flachdichtung 27 als Dichtelement anstelle eines Rundschnurringes 11 wie in **Figur 1** dargestellt. Das offene Ende des hier nicht näher dargestellten Anschlussstückes ist kragenartig ausgebildet, damit es sich abdichtend an die Flachdichtung 27 anlegen kann. Die Dichtscheibe 10' ist entsprechend ausgebildet und unter Wegfall einer hohlkehlartigen Ausnehmung 24 **(Figur 4)** ist die der Flachdichtung 27 zugewandte Stirnseite eben.

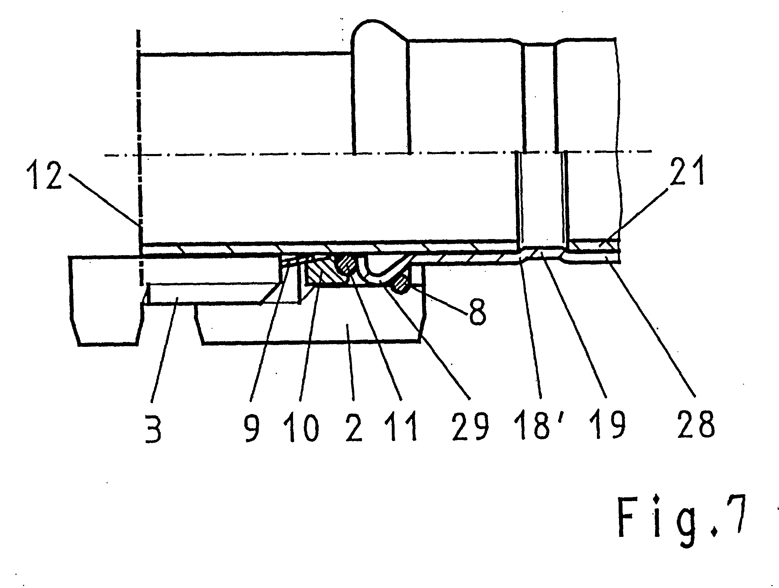

**Figur** 7 zeigt im gleichen Längsschnitt wie **Figur 2** eine vierte Ausführungsform. Diese zeichnet sich dadurch aus, dass der der Überwurfmutter 2 zugewandte Endbereich des Pressfittingelementes 28 als hakenförmige Ringwulst 29 ausgebildet ist. Die Abdichtung erfolgt wie in **Figur 2** über einen Rundschnurring 11, die axiale Ausziehsicherung über nimmt ein in die Oberwurfmutter 2 einsetzbarer Sprengring 8.
Diese Variante hat den Vorteil, dass als Anschlussstück standardisierte Pressfittingele mente wie Muffe, Bogen oder Reduzierstück eingesetzt werden können und die gemäß **Figur 2 und Figur 6** dargestellte Anpassung des Endbereiches entfallen kann.
Das von links in den Verschraubungskörper eingeschobene Leitungsrohr 12 erstreckt sich bis in den Anfangsbereich des Anschlussstückes. In diesem hier vorliegenden Fall kommt die Stirnseite des eingeschobenen Leitungsrohres 12 am ersten Absatz 18' des Press fittingelementes 28 zur Anlage.

### Bezugszeichenliste

| **Nr.** | **Bezeichnung** |
|---|---|
| 1 | Kupplung (erste Ausführungsform) |
| 2 | Überwurfmutter |
| 3 | Einschraubteil |
| 4 | Innengewindeabschnitt - Überwurfmutter |
| 5 | Außengewindeabschnitt - Einschraubteil |
| 6 | Leitungsrohrabschnitt |
| 7 | kegelstumpfartige Aufweitung |
| 8 | Sprengring |
| 9 | Klemmring |
| 10,10' | Dichtscheibe |
| 11 | Rundschnurring |
| 12 | Leitungsrohr |
| 13 | Kupplung (zweite Ausführungsform) |
| 14 | Pressfittingelement |
| 15 | Ringwulst |
| 16 | Dichtring |
| 17 | erster zylindrisch ausgebildeter Abschnitt |
| 18, 18' | Absatz |
| 19 | zweiter zylindrisch ausgebildeter Abschnitt |
| 20 | dritter zylindrisch ausgebildeter Abschnitt |
| 21 | Leitungsrohr |
| 22 | Absatzmuffe |
| 23 | Mutterteil |
| 24 | Ausnehmung |
| 25 | konische Bohrung |
| 26 | konische Mantelfläche |
| 27 | Flachdichtung |
| 28 | Pressfittingelement (Muffe) |
| 29 | Ringwulst |

## Patentansprüche

1. Kupplung zum Verbinden eines Leitungsrohres (12) mit einem Anschlusselement, bestehend aus einem einen Außensechskant und einen Gewindeabschnitt (5) aufweisenden Verschraubungskörper (2), der mit dem koaxial liegenden Anschlusselement verbunden ist und mit einer mit dem Gewindeabschnitt (5) verschraubbaren Kontermutter (3) zusammen wirkt, und zur Abdichtung des in den Verschraubungskörper (2) schiebbaren Leitungsrohres (12) im Verschraubungskörper (2) ein Dichtelement (11, 27), eine Dichtscheibe (10, 10') und ein Klemmring (9) angeordnet sind,
**dadurch gekennzeichnet,**
**dass** das Anschlusselement als separates Anschlussstück (6, 14, 22, 28) ausgebildet ist, das entgegengesetzt zur Einschubrichtung des Leitungsrohres (12) in den Verschraubungskörper (2) einschiebbar und gegen Herausziehen fixierbar ist, wobei das in den Verschraubungskörper (2) schiebbare Leitungsrohr (12) sich bis in den Anfangsbereich des Anschlussstückes (6, 14, 22, 28) erstreckt.

2. Kupplung nach Anspruch 1,
**dadurch gekennzeichnet,**
**dass** das Anschlussstück als Leitungsrohrabschnitt (6) ausgebildet ist.

3. Kupplung nach Anspruch 1
**dadurch gekennzeichnet,**
**dass** das Anschlussstück als Pressfittingelement (14) ausgebildet ist.

4. Kupplung nach Anspruch 1
**dadurch gekennzeichnet,**
**dass** das Anschlussstück als Absatzmuffe (22) ausgebildet ist.

5. Kupplung nach Anspruch 1
**dadurch gekennzeichnet,**
**dass** das Anschlussstück als Gusskörper ausgebildet ist.

6. Kupplung nach den Ansprüchen 1 bis 5
**dadurch gekennzeichnet,**
**dass** das Anschlussstück (6, 14, 22) an dem dem Verschraubungskörper (2) zugewandten Ende kegelstumpfartig (7) aufgeweitet ist.

7. Kupplung nach den Ansprüchen 1 bis 5
**dadurch gekennzeichnet,**
**dass** das Anschlussstück an dem dem Verschraubungskörper (2) zugewandten Ende einen Kragen aufweist.

8. Kupplung nach den Ansprüchen 1 bis 5,
**dadurch gekennzeichnet,**
**dass** das Anschlussstück (28) an dem dem Verschraubungskörper (2) zugewandten Ende mit einer hakenförmig ausgebildeten Ringwulst (29) versehen ist.

9. Kupplung nach Anspruch 3 und 8,
**dadurch gekennzeichnet,**
**dass** das Anschlussstück als Standard-Pressfittingelement (14, 28) ausgebildet ist.

10. Kupplung nach den Ansprüchen 1 bis 9,
**dadurch gekennzeichnet,**
**dass** die Sicherung gegen Herausziehen des Anschlussstückes (6, 14, 22, 28) über einen in den Verschraubungskörper (2) einlegbaren Sprengring (8) erfolgt.

11. Kupplung nach den Ansprüchen 1 bis 10,
**dadurch gekennzeichnet,**
**dass** der Verschraubungskörper als Überwurfmutter (2) ausgebildet ist, die mit einer als Einschraubteil (3) ausgebildeten Kontermutter zusammen wirkt.

12. Kupplung nach einem der Ansprüche 1 bis 11,
**dadurch gekennzeichnet,**
**dass** der Klemmring (9) im Querschnitt gesehen kegelstumpfartig ausgebildet ist, der mit der komplementär dazu ausgebildeten Dichtscheibe (10, 10') zusammen wirkt.

13. Kupplung nach Anspruch 1 und 12,
**dadurch gekennzeichnet,**
**dass** die Dichtscheibe (10) auf der dem Anschlussstück (6, 14, 22, 28) zugewandten Seite eine Ausnehmung (24) für das Dichtelement (11) aufweist.

14. Kupplung nach Anspruch 1 und 13,
**dadurch gekennzeichnet,**
**dass** das Dichtelement als Rundschnurring (11) ausgebildet ist.

15. Kupplung nach Anspruch 1 und 13,
**dadurch gekennzeichnet,**
**dass** das Dichtelement als Flachdichtung (27) ausgebildet ist.

## Claims

1. Coupling for joining a conduit pipe (12), with a connection element consisting of a screw fitting (2) that has a hexagon insert bit and a threaded section (5), said screw fitting being connected to the coaxially located connection element and operating in conjunction with a locknut (3) which can be screwed together with the threaded section (5), and - in order to seal the conduit pipe (12) which can be inserted into the screw fitting (2) - there are, in the screw fitting (2), a sealing element (11, 27), a sealing washer (10, 10') and a locking ring (9),
**characterised in that**
the connection element is made in the form of a separate connecting piece (6, 14, 22, 28) which can be inserted into the screw fitting (2) in the opposite direction to the insertion direction of the pipe (12) and can be secured against being pulled out, the pipe (12) which can be pushed into the screw fitting (2) extending as far as the front area of the connecting piece (6, 14, 22, 28).

2. Coupling as in claim 1,
**characterised in that**
the connecting piece is in the form of a pipe section (6).

3. Coupling as in claim 1,
**characterised in that**
the connecting piece is in the form of a press fitting element (14).

4. Coupling as in claim 1,
**characterised in that**
the connecting piece is in the form of a reducing socket (22).

5. Coupling as in claim 1,
**characterised in that**
the connecting piece is in the form of a casting.

6. Coupling as in claims 1 to 5,
**characterised in that**
the connecting piece (6, 14, 22) widens out in a tapered manner at the end that faces towards the screw fitting (2).

7. Coupling as in claims 1 to 5,
**characterised in that**
the connecting piece has a collar at the end facing towards the screw fitting (2).

8. Coupling as in claims 1 to 5,
**characterised in that**
the connecting piece (28) has a hook-shaped annular ring (29) at the end facing towards the screw fitting (2).

9. Coupling as in claim 3 and 8,
**characterised in that**
the connecting piece is in the form of a standard press fitting element (14, 28).

10. Coupling as in claims 1 to 9,
**characterised in that**
the securing of the connecting piece (6, 14, 22, 28) against being pulled out is effected by means of a snap ring (8) which can be placed into the screw fitting (2).

11. Coupling as in claims 1 to 10,
**characterised in that**
the screw fitting is in the form of a swivel nut (2) that operates in conjunction with locknut which is in the form of a screw-in part (3).

12. Coupling as in one of claims 1 to 11,
**characterised in that**,
when viewed in cross-section, the locking ring (9) is tapered in shape and operates in conjunction with the sealing washer (10, 10') which is made to be complementary to it.

13. Coupling as in claim 1 and 12,
**characterised in that**
the sealing washer (10) has, on the side facing the connecting piece (6, 14, 22, 28), a recess (24) for the sealing element (11).

14. Coupling as in claim 1 and 13,
**characterised in that**
the sealing element is in the form of a toroidal sealing ring (11).

15. Coupling as in claim 1 and 13,
**characterised in that**
the sealing element is in the form of a flat gasket (27).

## Revendications

1. Dispositif d'accouplement pour relier un tube de conduite (12) à un élément de raccord, comportant un corps à visser (2) présentant un six pans externe et un segment fileté (5), lequel corps à visser est relié à l'élément de raccord placé de manière coaxiale et coopère avec un contre-écrou (3) pouvant être vissé au segment fileté (5), et un élément d'étanchéité (11, 27), une rondelle d'étanchéité (10, 10') et une bague de serrage (9) étant agencés pour l'étanchéité du tube de conduite (12) dans le corps à visser (2), ledit tube de conduite pouvant être poussé dans ce dernier,
**caractérisé en ce que** l'élément de raccord est réalisé sous la forme d'un raccord séparé (6, 14, 22, 28) qui peut être inséré à l'opposé du sens d'insertion du tube de conduite (12) dans le corps à visser (2) et peut être fixé pour ne pas pouvoir être sorti, le tube de conduite (12), pouvant être poussé dans le corps à visser (2), s'étendant jusque dans la zone de commencement du raccord (6, 14, 22, 28).

2. Dispositif d'accouplement selon la revendication 1,
**caractérisé en ce que** le raccord est réalisé sous forme de segment de tube de conduite (6).

3. Dispositif d'accouplement selon la revendication 1,
**caractérisé en ce que** le raccord est réalisé sous forme d'élément à sertir (14).

4. Dispositif d'accouplement selon la revendication 1,
**caractérisé en ce que** le raccord est réalisé sous forme de manchon de réduction (22).

5. Dispositif d'accouplement selon la revendication 1,
**caractérisé en ce que** le raccord est réalisé sous forme de corps en fonte.

6. Dispositif d'accouplement selon les revendications 1 à 5,
**caractérisé en ce que** le raccord (6, 14, 22) est élargi en forme de cône tronqué (7) à l'extrémité orientée vers le corps à visser (2).

7. Dispositif d'accouplement selon les revendications 1 à 5,
**caractérisé en ce que** le raccord présente une collerette à l'extrémité orientée vers le corps à visser (2).

8. Dispositif d'accouplement selon les revendications 1 à 5,
**caractérisé en ce que** le raccord (28) est pourvu d'un bourrelet annulaire (29) réalisé en forme de crochet à l'extrémité orientée vers le corps à visser (2).

9. Dispositif d'accouplement selon les revendications 3 et 8,
**caractérisé en ce que** le raccord est réalisé sous forme d'élément à sertir standard (14, 28).

10. Dispositif d'accouplement selon les revendications 1 à 9,
**caractérisé en ce que** le blocage contre la sortie du raccord (6, 14, 22, 28) a lieu par le biais d'un jonc (8) pouvant être posé dans le corps à visser (2).

11. Dispositif d'accouplement selon les revendications 1 à 10,
**caractérisé en ce que** le corps à visser est réalisé sous forme d'écrou d'accouplement (2) qui coopère avec un contre-écrou réalisé sous forme de partie à visser (3).

12. Dispositif d'accouplement selon l'une des revendications 1 à 11,
**caractérisé en ce que** la bague de serrage (9) est réalisée en forme de cône tronqué vue en section transversale et coopère avec la rondelle d'étanchéité (10, 10') réalisée de manière complémentaire à celle-ci.

13. Dispositif d'accouplement selon les revendications 1 et 12,
**caractérisé en ce que** la rondelle d'étanchéité (10) présente un évidement (24) pour l'élément d'étanchéité (11) sur la face orientée vers le raccord (6, 14, 22, 28).

14. Dispositif d'accouplement selon les revendications 1 et 13,
**caractérisé en ce que** l'élément d'étanchéité est réalisé sous forme de joint torique (11).

15. Dispositif d'accouplement selon les revendications 1 et 13,
**caractérisé en ce que** l'élément d'étanchéité est réalisé sous forme de joint plat (27).
